# EUROPÄISCHE PATENTANMELDUNG

(11) **EP 3 805 180 A1**
(43) Veröffentlichungstag der Anmeldung: **14.04.2021**
(21) Anmeldenummer: 19206169.5
(22) Anmeldetag: 30.10.2019
(51) Int. Cl.: C04B 26/06, C04B 40/06, C04B 26/02, C04B 26/16, F16B 13/14

(54) **BEFESTIGUNGSANORDNUNG MIT EINER GEWINDEFORMENDEN SCHRAUBE UND EINER AUSGEHÄRTETEN MASSE**

(30) Priorität: 10.10.2019 EP 19202475; 10.10.2019 EP 19202360; 10.10.2019 EP 19202355
(71) Anmelder: Hilti Aktiengesellschaft, 9494 Schaan (LI)
(72) Erfinder: BÜRGEL, Thomas, 86899 Landsberg (DE); POL, Frederic, 6800 Feldkirch (AT); JIMENEZ, Cristian, Shanghai, CP 200031 (CN); KUMRU, Memet-Emin, 86199 Augsburg (DE)
(74) Vertreter: Hilti Aktiengesellschaft Corporate Intellectual Property

(57) **Zusammenfassung**

Beschrieben wird eine Befestigungsanordnung mit einer Schraube, welche einen Schaft und zumindest eine Gewindewendel aufweist, wobei die Gewindewendel am Schaft angeordnet ist, und mit einer ausgehärteten Masse, wobei die Schraube in einem Loch in einem Substrat angeordnet ist und zwischen dem Schaft und der Lochwand ein Spalt vorgesehen ist, welcher mit der ausgehärteten Masse gefüllt ist, wobei die ausgehärtete Masse durch Härtung eines mehrkomponentigen Reaktionsharzsystems erhältlich ist.

## Beschreibung

Die Erfindung betrifft eine Befestigungsanordnung mit einer gewindeformenden Schraube und einer ausgehärteten Masse, wobei die gewindeformende Schraube in einem Loch in einem Substrat, insbesondere in einem mineralischen Baustoff wie Beton, angeordnet ist und zwischen dem Schaft der Schraube und der Lochwand ein Spalt vorgesehen ist, welcher mit der ausgehärteten Masse gefüllt ist.

Aus der EP 0 623 759 B1 ist eine gewindeformende Schraube zum Einschrauben in harte Untergründe bekannt.

Aus der EP 1 536 149 A2 ist eine Innengewindehülse mit einem selbstschneidenden Gewinde bekannt.

Aus der US 4,350,464 A ist eine schlagend setzbare Ankerstange bekannt, die an einem Schaft als Grundkörper ein selbstfurchendes Gewinde aufweist.

Nachteilig an den bekannten Lösungen ist, dass aufgrund der Eigenschaften des Untergrundes und der Art und des Zustandes des Werkzeuges zum Erstellen des Loches die Größe des Ringspaltes zwischen der Mantelfläche des Schraubengrundkörpers und der Lochwandung von Befestigungspunkt zu Befestigungspunkt stark variieren kann. Zudem können hohe Belastungen auf die von dem Gewinde erzeugten Hinterschnitte im Substrat wirken, welche zu einem teilweisen oder - im extremsten Fall - zu einem vollständigen Versagen des erstellten Befestigungspunktes führen. Um dies zu vermeiden und eine hohe Tragfähigkeit zu erreichen, weisen derartige gewindeformende Schrauben, insbesondere Betonschrauben, eine relativ große Einbindelänge des Gewindes im Substrat auf, was jedoch einen hohen Aufwand zum Setzen der entsprechenden Schraube bedingt.

Aus der DE 198 20 671 A1, der DE 103 11 471 A1 oder der DE 10 2006 000 414 A1 ist eine gewindeformende Schraube bekannt, die in ein zuvor mit einer aushärtbaren Masse befülltes Bohrloch gesetzt wird. Das Gewinde der Schraube ist nach dem Aushärten der aushärtbaren Masse in dem Substrat und in der Masse verankert.

Bekannte aushärtbare Massen, wie beispielsweise der aus der DE 10002605 A1 bekannte Zweikomponentenmörtel auf Epoxidbasis oder der aus der DE 3514031 A1 bekannte Zweikomponentenmörtel auf Basis radikalisch härtbarer Verbindungen, weisen einen hohen Füllstoffanteil auf, was eine hohe Viskosität und geringes Schrumpfverhalten bei einer ausreichenden inneren Festigkeit der ausgehärteten Masse gewährleistet.

Nachteilig an der Lösung etwa gemäß der DE 198 20 671 A1 ist zudem, dass der Ringspalt zwischen der Mantelfläche des Grundkörpers der Schraube und der Bohrlochwandung eine ausreichende Größe aufweisen muss, so dass neben dünnflüssigen Massen auch aushärtbare Massen mit Füllstoffen verwendbar sind. Zur vollständigen Verfüllung dieses Ringspaltes ist somit eine große Menge der aushärtbaren Masse erforderlich.

Die für andere Befestigungselemente, wie Ankerstangen und dergleichen, bekannten Patronensysteme, wie sie etwa aus der EP 0 431 302 A2, der EP 0 432 087 A1, der EP 0 312 776 A1 oder der EP 0 638 705 A1 bekannt sind, sind aufgrund des sehr kleinen Ringspalts für die Anwendung mit gewindeformenden Schrauben nicht geeignet, da sie entweder zu grobkörnige Füllstoffe enthalten oder die Patronen nicht mit herkömmlichen gewindeformenden Schrauben zerkleinert werden können oder die Patronen selbst beim Zerkleinern zu große Partikel ergeben. Da bei dieser Anwendung nur wenige Schraubendrehungen möglich sind, bis die Schraube gesetzt ist, muss eine schnelle Durchmischung der aushärtbaren Masse gewährleistet sein, damit diese zuverlässig aushärtet, was mit den bekannten Massen bisher nicht möglich ist.

Wird eine herkömmliche gewindeformende Schraube in ein zuvor mit einer aushärtbaren Masse befülltes Sackloch gesetzt, ist der Ringspalt zwischen der Mantelfläche des Grundkörpers der Schraube und der Sacklochwandung für die meisten Arten von aushärtbaren Massen, die einen sehr hohen Anteil an anorganischen Füllstoffen haben, zu klein. Somit können lediglich dünnflüssige, aushärtbare Massen verwendet werden, die weniger bis gar keine Füllstoffe enthalten und die verhältnismäßig teuer sind und im Vergleich zu solchen mit Füllstoffen eine geringere Festigkeit aufweisen.

Aufgabe der Erfindung ist es, eine Befestigungsanordnung anzugeben, die besonders einfach und sicher zu erstellen ist und mit der eine leistungsfähige und zuverlässige Befestigung eine gewindeformenden Schraube möglich ist.

Diese Aufgabe wird erfindungsgemäß durch eine Befestigungsanordnung mit den Merkmalen des Anspruchs 1 gelöst. Bevorzugte Ausführungsformen sind in den abhängigen Ansprüchen angegeben.

Die erfindungsgemäße Befestigungsanordnung ist dadurch gekennzeichnet, dass die ausgehärtete Masse durch Härtung eines mehrkomponentigen Reaktionsharzsystems erhältlich ist, das in einer Komponente mindestens eine radikalisch härtbare Verbindung und mindestens einen hydrophilen anorganischen Füllstoff und in einer weiteren Komponente ein Härtungsmittel für das mindestens eine radikalisch härtbare Reaktionsharz, Wasser und ein Rheologieadditiv auf Basis eines Schichtsilikats enthält.

Das mehrkomponentige Reaktionsharzsystem, welches in der erfindungsgemäßen Befestigungsanordnung zum Einsatz kommt, enthält in einer Komponente (auch Harzkomponente genannt) mindestens eine radikalisch härtbare Verbindung und einen hydrophilen anorganischen Füllstoff und in einer weiteren Komponente (auch Härterkomponente genannt) ein Härtungsmittel für das mindestens eine radikalisch härtbare Reaktionsharz, Wasser und ein Rheologieadditiv auf Basis eines Schichtsilikats.

Die Harzkomponente und die Härterkomponente sind bis zur Verwendung des Reaktionsharzsystems räumlich getrennt voneinander verpackt, damit erst eine Reaktion stattfindet, wenn die beiden Komponenten miteinander in Kontakt gebracht werden.

Die beiden Komponenten sind in der Regel in Folienbeutel verpackt, und liegen entweder als Side-by-Side- oder als Beutel-in-Beutel-System vor. Generell ist jedoch jedwede Verpackung und Verpackungsform möglich, bei der die beiden Komponenten getrennt voneinander verpackt sind und die sich durch das Setzen der gewindeformenden Schraube leicht öffnen und durch die Schraube zermahlen lässt.

Die Harzkomponente enthält mindestens eine radikalisch härtbare Verbindung. Die radikalisch härtbare Verbindung kann ein Reaktionsharz sein. Alternativ kann die eine radikalisch härtbare Verbindung ein Reaktivverdünner sein oder auch eine Mischung aus mindestens einem Reaktionsharz und mindestens einem Reaktivverdünner umfassen.

Geeignete radikalisch härtbare Verbindungen als Reaktionsharz sind ethylenisch ungesättigte Verbindungen, Verbindungen mit Kohlenstoff-Kohlenstoff-Dreifachbindungen und Thiol-Yn/En-Harze, wie sie dem Fachmann bekannt sind.

Besonders bevorzugt ist die radikalisch härtbare Verbindung, das Reaktionsharz, eine ungesättigte Verbindung auf Urethan(meth)acrylatbasis, Epoxy(meth)acrylatbasis, ein (Meth)acrylat eines alkoxylierten Bisphenols oder eine Verbindung auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze.

Beispiele geeigneter ungesättiger Polyester, die verwendet werden können, können in folgende Kategorien eingeteilt werden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5.000 und noch stärker bevorzugt im Bereich von 750 bis 4.000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Vinylesterharze sind Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in DE 10 2011 017 626 B4 beschriebenen Urethanmethacrylatharze (die auch als Vinylesterurethanharze bezeichnet werden), deren Zusammensetzung hier durch Bezugnahme aufgenommen wird.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglykol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3.000 Dalton, stärker bevorzugt 500 bis 1.500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer Ausführungsform enthält die Harzkomponente des Reaktionsharzsystems zusätzlich zu dem Reaktionsharz mindestens eine weitere niederviskose, radikalisch polymerisierbare Verbindung als Reaktivverdünner. Diese wird zweckmäßig zu dem Reaktionsharz gegeben und ist daher in der Harzkomponente enthalten.

Geeignete, insbesondere niederviskose, radikalisch härtbare Verbindungen als Reaktivverdünner sind in den Anmeldungen EP 1 935 860 A1 und DE 195 31 649 A1 beschrieben. Vorzugsweise enthält das Reaktionsharzsystem als Reaktivverdünner einen (Meth)acrylsäureester, wobei besonders bevorzugt folgende (Meth)acrylsäureester verwendet werden können: Hydroxyalkyl(meth)acrylate wie Hydroxypropyl(meth)acrylat, 2-Hydroxyethyl(meth)acrylat; Alkandiol(meth)acrylate wie Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat, Hexandiol-1,6-di(meth)acrylat, 2-Ethylhexyl(meth)acrylat, Phenylethyl(meth)acrylat, Tetrahydrofurfuryl(meth)acrylat; Trimethylolpropantri(meth)acrylat; Ethyltriglykol(meth)acrylat; N,N-Dimethylaminoethyl(meth)acrylat; N,N-Dimethylaminomethyl(meth)acrylat; Acetoacetoxyethyl(meth)acrylat; Alkylenglykoldi(meth)acrylate wie Ethylen- und Diethylenglykoldi(meth)acrylat; Oligo- und Polyalkylenglykoldi(meth)acrylate wie PEG200di(meth)acrylat; Methoxypolyethylenglykolmono(meth)acrylat; Trimethylcyclohexyl(meth)acrylat; Dicyclopentenyloxyethyl(meth)acrylat; Tricyclopentadienyldi(meth)acrylat; Dicyclopentenyloxyethylcrotonat; Bisphenol-A-(meth)acrylat; Novolakepoxidi(meth)acrylat; Di-[(meth)acryloyl-maleoyl]-tricyclo-5.2.1.0.^{2.6}-decan; 3-(Meth)acryloyl-oxymethyl-tricylo-5.2.1.0.^{2.6}-decan; 3-(Meth)cyclopentadienyl(meth)-acrylat; Isobornyl(meth)acrylat; Decalyl-2-(meth)acrylat; Tetrahydrofurfuryl(meth)acrylat; und alkoxylierte Tri-, Tetra- und Pentamethylacrylate.

Der Reaktivverdünner kann allein oder als Mischung aus zwei oder mehreren Reaktivverdünnern eingesetzt werden.

Grundsätzlich können auch andere übliche radikalisch polymerisierbare Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Die radikalisch härtbare Verbindung kann in einer Menge von 10 bis 99,99 Gew.-%, bevorzugt 15 bis 97 Gew.-%, besonders bevorzugt 30 bis 95 Gew.-%, bezogen auf die Harzkomponente, in dem Reaktionsharzsystem enthalten sein. Hierbei kann die radikalisch härtbare Verbindung entweder ein Reaktionsharz auf Basis einer radikalisch härtbaren Verbdinung oder ein Reaktivverdünner oder eine Mischung eines Reaktionsharzes mit zwei oder mehreren Reaktivverdünnern sein.

Für den Fall, dass die radikalisch härtbare Verbindung eine Mischung aus mindestens einem Reaktionsharz und mindestens einem Reaktivverdünner ist, so entspricht die Menge der Mischung, die in dem Reaktionsharzsystem enthalten sein kann, der Menge der radikalisch härtbaren Verbindung, nämlich von 10 bis 99,99 Gew.-%, bevorzugt 15 bis 97 Gew.-%, besonders bevorzugt 30 bis 95 Gew.-%, bezogen auf die Harzkomponente, wobei, bezogen auf die Mischung aus mindestens einem Reaktionsharz und mindestens einem Reaktivverdünner, der Anteil des Reaktionsharzes 0 bis 100 Gew.-%, bevorzugt 30 bis 65 Gew.-% und der Anteil des Reaktivverdünners oder einer Mischung aus mehreren Reaktivverdünnern 0 bis 100 Gew.-%, bevorzugt 35 bis 70 Gew.-% beträgt.

Die Gesamtmenge der radikalisch härtbaren Verbindung hängt von dem Füllgrad, also der Menge der anorganischen Füllstoffe ab.

Erfindungsgemäß wird in der Harzkomponente ein hydrophiler anorganischer Füllstoff verwendet. Hydrophil bedeutet dabei, dass der Füllstoff eine Wechselwirkung mit Wasser eingehen oder mit Wasser reagieren kann. Hierdurch wird sichergestellt, dass unmittelbar nach dem Mischen der Harzkomponente und der sehr niedrig viskosen wasserhaltigen Härterkomponente die erhaltene Masse so viskos wird, dass sie standfest wird, und damit nicht mehr aus dem Loch läuft, was insbesondere bei Überkopfbefestigungen oder bei Wandbefestigungen von Vorteil ist. Die Viskosität ist so hoch, dass selbst bei einem Herausdrehen der Schraube unmittelbar nach dem Setzen der Schraube, wenn die Masse noch nicht oder nicht vollständig ausgehärtet ist, die Masse durch die Drehbewegung der Schraube nicht verspritzt wird.

Bei den verwendeten hydrophilen anorganischen Füllstoffen können insbesondere die Oberflächen aber auch die inneren Bereiche hydrophile Eigenschaften aufweisen. Insbesondere die Oberflächen der anorganischen Füllstoffe können durch hydrophile Beschichtungen, Grundierungen oder Versiegelungen modifiziert sein.

Beispiele anorganischer Füllstoffe mit hydrophilen Eigenschaften umfassen solche, deren Oberfläche mit einem hydrophilen Oberflächenbehandlungsmittel behandelt ist. Beispiele solcher hydrophilen Oberflächenbehandlungsmittel umfassen unter anderem Silanoberflächenbehandlungsmittel, Titanatoberflächenbehandlungsmittel, Aluminiumoberflächenbehandlungsmittel, Zirkoniumaluminatoberflächenbehandlungsmittel, Al₂O₃, TiO₂, ZrO₂, Silicon und Aluminiumstearat, worunter ein Silanoberflächenbehandlungsmittel bevorzugt ist.

Geeignete Füllstoffe sind Erdalkalimetalle und deren Salze, Bentonit, Carbonate, Kieselsäuren, Kieselgel, Salze von Erdalkalimetallen mit Kieselsäure und Silikaten, insbesondere Kieselsäuren.

Der anorganische Füllstoff kann durch ein Trockenverfahren, wie Dampfphasenabscheidung oder Verbrennung, oder durch ein Nassverfahren, wie Fällung, hergestellt werden. Ebenso kann ein kommerziell erhältliches Produkt verwendet werden. Unter Berücksichtigung der rheologischen Eigenschaften des Reaktionsharzsystems ist der hydrophile anorganische Füllstoff bevorzugt ein Feinfüllstoff, mit einer Oberfläche von mehr als 80 m²/g, bevorzugt von mehr als 150 m²/g und stärker bevorzugt zwischen 150 und 400 m²/g.

Bevorzugt umfasst der anorganische Füllstoff einen Siliziumoxid-basierten Füllstoff und ganz besonders bevorzugt eine Kieselsäure.

Die Kieselsäure ist nicht auf eine bestimmte Art oder deren Herstellung beschränkt. Die Kieselsäure kann eine natürliche oder eine synthetische Kieselsäure sein.

Die Kieselsäure ist bevorzugt eine amorphe Kieselsäure, die aus der Gruppe bestehend aus kolloidaler Kieselsäure, nasschemisch hergestellter Kieselsäuren, wie Fällungskieselsäuren, Kieselgele, Kieselsole, pyrogen oder thermisch hergestellter Kieselsäuren, die z.B. im Lichtbogen, Plasma oder durch Flammenhydrolyse hergestellt sind, Kieselrauch, Kieselglas (Quarzglas), Kieselgut (Quarzgut) und Skeletten von Radiolarien und Diatomeen in Form von Kieselgur ausgewählt ist.

Der Anteil des hydrophilen anorganischen Füllstoffs hängt von den gewünschten Eigenschaften des mehrkomponentigen Reaktionsharzsystems ab. Bevorzugt wird der hydrophile anorganische Füllstoff in einer Menge von 0,01 bis 15 Gew.-%, stärker bevorzugt 0,1 bis 10 Gew.-% und besonders bevorzugt im Bereich von 1 bis 7 Gew.-%, jeweils bezogen auf die Harzkomponente, verwendet.

Bevorzugt enthält das Reaktionsharzsystem keine weiteren Füllstoffe.

Es ist jedoch nicht ausgeschlossen, dass das Reaktionsharzsystem weitere Zuschlagstoffe, wie Füllstoffe, enthalten kann. Dies vor allem dann, wenn die Eigenschaften des Reaktionsharzsystems angepasst werden müssen.

Geeignete weitere, andere Zuschlagstoffe sind übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Weitere denkbare Zuschlagstoffe sind ferner Rheologieadditive, wie Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Harzkomponente, Härterkomponente), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Das Reaktionsharzsystem kann des Weiteren mindestens einen Beschleuniger enthalten. Geeignete Beschleuniger sind dem Fachmann bekannt. Diese sind zweckmäßig Amine und unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Triisobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Dipropylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugt sind Anilin- und Toluidin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer® PTE).

Der Beschleuniger kann in einer Menge von 0 bis 10 Gew.-%, bevorzugt 0,01 bis 5 Gew.-%, besonders bevorzugt 0,5 bis 3 Gew.-%, bezogen auf die Harzkomponente, in den Reaktionsharzsystem enthalten sein. Sind mehrere Beschleuniger enthalten, so entspricht die eben genannte Menge der Gesamtmenge an Beschleunigern.

In einer noch weiteren Ausführungsform enthält die Harzkomponente des Weiteren einen Inhibitor sowohl für die Lagerstabilität des Reaktionsharzes und der Harzkomponente als auch zur Einstellung der Gelzeit. Der Inhibitor kann allein oder zusammen mit dem Beschleuniger in dem Reaktionsharzsystem enthalten sein. Bevorzugt wird zur Einstellung der Verarbeitungszeit bzw. Gelzeit eine entsprechend aufeinander abgestimmte Beschleuniger-Inhibitor-Kombination eingesetzt.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-Oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt tert-ButylBrenzkatechin und Brenzkatechin durch die funktionelle Gruppe werden die gewünschten Eigenschaften erreicht (im Vergleich zu den sonst verwendeten Reaktivverdünnern), BHT und Phenothiazin.

Die Inhibitoren können, abhängig von den gewünschten Eigenschaften des Reaktionsharzsystems, entweder allein oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktionsharz-Zusammensetzung zeigt.

Der Inhibitor kann in einer Menge von 0 bis 5 Gew.-%, bevorzugt 0,001 bis 3 Gew.-%, besonders bevorzugt 0,01 bis 1 Gew.-%, bezogen auf die Harzkomponente, in den Reaktionsharzsystem enthalten sein. Sind mehrere Inhibitoren enthalten, so entspricht die eben genannte Menge der Gesamtmenge an Inhibitoren.

Zweckmäßig wird die Härtung der radikalisch härtbaren Verbindung mit einem Peroxid als Härtungsmittel initiiert. Alle dem Fachmann bekannten Peroxide, die zum Härten von Methacrylatharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

Neben dem Peroxid enthält die Härterkomponente noch Wasser als Phlegmatisierungsmittel. Neben dem Wasser kann die Härterkomponente noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid als Härtungsmittel zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (BP40SAQ oder BP20SAQ). Perkadox 40L-W (Fa. Nouryon), Luperox® EZ-FLO (Fa. Arkema), Peroxan BP40W (Fa. Pergan).

Das Peroxid kann in einer Menge von 2 bis 50 Gew.-%, bevorzugt 5 bis 45 Gew.-%, besonders bevorzugt 10 bis 40 Gew.-%, bezogen auf die Härterkomponente, in den Reaktionsharzsystem enthalten sein.

Neben Wasser und dem Härtungsmittel enthalten kommerzielle Peroxid-Dispersionen Emulgatoren, Frostschutzmittel, Puffer und Rheologieadditive in nicht veröffentlicher Art und Menge.

Die Härterkomponente enthält ferner ein Rheologieadditiv auf Basis eines Schichtsilikats, insbesondere eines aktivierten oder quellfähigen Schichtsilikats. Besonders bevorzugt ist das quellfähige Schichtsilikat ein Magnesium-Aluminium-Silikat oder ein Natrium-Aluminium-Silikat. Hierdurch wird erreicht, dass bei der wässrigen Härtungsmittelsuspension keine Sedimentation auftritt und die Härterkomponente damit lagerstabil bleibt.

In einer bevorzugten Ausführungsform besteht das Rheologieadditiv aus dem quellfähigen Schichtsilikat oder enthält dieses als Hauptbestandteil. *"Hauptbestandteil"* bedeutet dabei, dass das quellfähige Schichtsilikat mehr als die Hälfte des Rheologieadditivs ausmacht, also mehr als 50 Gew.-%, insbesondere 60 bis 80 Gew.-%. Besonders bevorzugt ist das Rheologieadditiv Montmorillonit oder enthält dieses als Hauptbestandteil, beispielsweise Bentonit.

Die Menge des einzusetzenden Rheologieadditivs hängt im Wesentlichen von der Wassermenge ab, wobei der Fachmann ohne weiteres in der Lage ist, das richtige Verhältnis dieser Bestandteile und auch der gegebenenfalls anzuwendenden Bestandteile derart auszuwählen, dass die Härterkomponente die erforderliche Viskosität und Fließfähigkeit besitzt. Bevorzugt enthält die Härterkomponente das Rheologieadditiv in einer Menge von 0,15 bis 5 Gew.-%, bezogen auf das Gesamtgewicht der Härterkomponente, enthalten ist.

Das Wasser ist in solch einer Menge enthalten, dass, abhängig von den Bestandteilen der Härterkomponente, sich die Gew.-% auf 100 addieren.

Das Reaktionsharzsystem, das in der erfindungsgemäßen Befestigungsanordnung verwendet wird, zeichnet sich durch eine niedrige Viskosität der dieses Additiv enthaltenden Harzkomponente aber eine hohe Viskosität der Mischung aus der Harzkomponente und der Härterkomponente aus, im Vergleich zu Ausführungsformen ohne das verwendete Rheologieadditiv oder zu Ausführungsformen mit anderen Rheologieadditiven, welche keine hydrophilen Eigenschaften haben.

Die Schraube, die in der erfindungsgemäßen Befestigungsanordnung zum Einsatz kommt, kann beispielsweise eine gewindeformende Schraube sein, wie eine Betonschraube oder dergleichen.

Der Begriff *"gewindeformende Schraube"* soll so verstanden werden, dass damit sowohl *"gewindefurchende Schraube",* die ihr Gegengewinde spanlos furcht, wobei der umgebende Werkstoff verfestigt wird, der auch das Muttergewinde bildet, als auch *"gewindeschneidende Schraube",* die ihr Gegengewinde spanend schneidet und die überwiegend in ein vorgebohrtes Loch, insbesondere Sackloch eingeschraubt wird, umfasst sein sollen.

Unter gewindeformende Schraube kann insbesondere eine Solche Schraube verstanden werden, die einen Schaft und ein Gewinde mit einem Gewindeaußendurchmesser und einer Gewindesteigung aufweist. Insbesondere liegt das Verhältnis von Gewindeaußendurchmesser zu Gewindesteigung im Bereich von 1,0 bis 2,0, bevorzugt von 1,2 bis 1,6 und weiter bevorzugt von 1,2 bis 1,45. In der Regel sind Wendel und Schaft aus einem Material gefertigt und sind einstückig. Wendel und Schaft können alternativ auch aus unterschiedlichen Materialien bestehen.

Die erfindungsgemäße Befestigungsanordnung wird mit gewindeformenden Schrauben in Löchern verwendet.

Die Löcher können Vertiefungen natürlichen oder nicht-natürlichen Ursprungs sein, also Risse, Spalten, Bohrlöcher und dergleichen. Es sind typischerweise Sacklöcher oder Bohrlöcher, insbesondere Bohrlöcher in verschiedenen Substraten, insbesondere mineralischen Baustoffen oder Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. Bevorzugt ist das Substrat Beton.

Beim Setzen der gewindeformenden Schraube in das vorgefertigte Loch in einem Substrat greift die Wendel des Gewindes in ein Gegengewinde in dem Substrat, welches dies Schraube beim Eindrehen formt, im Substrat ein. Insbesondere greift die Wendel nicht vollständig in das Gegengewinde in dem Substrat ein, damit ein hinreichend großer Spalt zwischen dem Schraubenschaft und der Lochwand verbleibt, der mit der aushärtbaren Masse befüllt werden kann.

Die erfindungsgemäße Befestigungsanordnung wird erstellt, indem in einem Substrat ein Loch erstellt, das mehrkomponentige Reaktionsharzsystem eingebracht und die gewindeformende Schraube gesetzt wird.

Beispielsweise kann die Befestigungsanordnung erstellt werden, indem in einem Betonbauteil ein Sackloch gebohrt, das mehrkomponentige Reaktionsharzsystem in Form eines Zweikammersystems, insbesondere Zweikammer-Beutelsystem eingebracht und die gewindeformende Schraube schlagdrehend gesetzt wird. Durch das Drehen der Schraube während des Setzens wird das Zweikammersystem zerstört, das heißt geöffnet, und die Komponenten des Reaktionsharzsystems gemischt. Die Mischung wird in den Spalt zwischen der Sacklochwand und der Schraube gedrückt und härtet dort aus, um die ausgehärtete Masse zu bilden. Die Verpackung des Zweikammersystems wird entweder zermahlen oder zumindest zerkleinert. Selbst wenn die Verpackung nicht zermahlen, sondern nur zerkleinert wird, so beeinträchtigt dies die Leistungsfähigkeit der Befestigungsanordnung nicht.

## Patentansprüche

1. Befestigungsanordnung
- mit einer Schraube, welche einen Schaft und zumindest eine Gewindewendel aufweist, wobei die Gewindewendel am Schaft angeordnet ist, und
- mit einer ausgehärteten Masse,
wobei die Schraube in einem Loch in einem Substrat angeordnet ist und zwischen dem Schaft und der Lochwand ein Spalt vorgesehen ist, welcher mit der ausgehärteten Masse gefüllt ist,
**dadurch gekennzeichnet, dass**
die ausgehärtete Masse durch Härtung eines mehrkomponentigen Reaktionsharzsystems erhältlich ist, das in einer Komponente mindestens eine radikalisch härtbare Verbindung und mindestens einen hydrophilen anorganischen Füllstoff und in einer weiteren Komponente ein Härtungsmittel für das mindestens eine radikalisch härtbare Reaktionsharz, Wasser und ein Rheologieadditiv auf Basis eines Schichtsilikats enthält.

2. Befestigungsanordnung nach Anspruch 1, **dadurch gekennzeichnet, dass** der hydrophile anorganische Füllstoff ein Siliziumoxid-basierter Füllstoff ist.

3. Befestigungsanordnung nach Anspruch 2, **dadurch gekennzeichnet, dass** der siliziumoxid-basierte Füllstoff eine Kieselsäure, insbesondere eine pyrogene Kieselsäure ist.

4. Befestigungsanordnung nach einem der vorhergehenden Ansprüche, **dadurch gekennzeichnet, dass** das Schichtsilikat ein quellfähiges Schichtsilikat, insbesondere ein Magnesium-Aluminium-Silikat oder ein Natrium-Aluminium-Silikat ist.

5. Befestigungsanordnung nach Anspruch 1 und 4, wobei das Rheologieadditiv aus dem quellfähigen Schichtsilikat besteht oder dieses als wesentlichen Bestandteil/Hauptbestandteil enthält.

6. Härterzusammensetzung nach Anspruch 5, wobei das Rheologieadditiv Montmorillonit ist oder dieses als wesentlichen Bestandteil/Hauptbestandteil enthält.

7. Befestigungsanordnung nach Anspruch 6, **dadurch gekennzeichnet, dass** das Rheologieadditiv Bentonit ist.

8. Befestigungsanordnung nach einem der vorhergehenden Ansprüche, **dadurch gekennzeichnet, dass** die radikalisch härtbare Verbindung wenigstens ein Reaktionsharz, wenigstens einen Reaktivverdünner oder eine Mischung aus wenigstens einem Reaktionsharz und wenigstens einem Reaktivverdünner umfasst.

9. Befestigungsanordnung nach Anspruch 8, **dadurch gekennzeichnet, dass** das Reaktionsharz eine Verbindung auf Urethan(meth)acrylatbasis, Epoxy(meth)acrylatbasis, ein (Meth)acrylat eines alkoxylierten Bisphenols oder auf Basis weiterer ethylenisch ungesättigter Verbindungen ist.

10. Befestigungsanordnung nach einem der vorhergehenden Ansprüche, **dadurch gekennzeichnet, dass** das Härtungsmittel ein Peroxid ist.

11. Befestigungsanordnung nach einem der vorhergehenden Ansprüche, **dadurch gekennzeichnet, dass** das Härtungsmittel und das Wasser in Form einer wässrigen Suspension vorliegen.

12. Befestigungsanordnung nach einem der vorhergehenden Ansprüche, **dadurch gekennzeichnet, dass** das Substrat ein mineralischer Baustoff, insbesondere Beton ist.

13. Befestigungsanordnung nach einem der vorhergehenden Ansprüche, **dadurch gekennzeichnet, dass** die Gewindewendel in ein Gegengewinde im Substrat eingreift.

14. Befestigungsanordnung nach einem der vorhergehenden Ansprüche, **dadurch gekennzeichnet, dass** die Gewindewendel einen Gewindeaußendurchmesser und eine Gewindesteigung hat, wobei das Verhältnis von Gewindeaußendurchmesser zu Gewindesteigung im Bereich von 1,0 bis 2,0, bevorzugt von 1,2 bis 1,6 liegt.
